# EUROPÄISCHE PATENTSCHRIFT

(11) **EP 1 402 660 B1**
(45) Veröffentlichungstag und Bekanntmachung des Hinweises auf die Patenterteilung: **11.05.2005**
(21) Anmeldenummer: 01953138.3
(22) Anmeldetag: 03.07.2001
(51) Int. Cl.: H04B 10/08, H04B 10/24

(54) **OPTO-ELEKTRONISCHES TRANSCEIVERMODUL UND VERFAHREN ZUM EMPFANG OPTISCHER SIGNALE**
OPTO-ELECTRONIC TRANSCEIVER MODULE AND METHOD FOR RECEIVING OPTICAL SIGNALS
MODULE EMETTEUR-RECEPTEUR OPTOELECTRONIQUE ET PROCEDE DE RECEPTION DE SIGNAUX OPTIQUES PAR UN MODULE EMETTEUR-RECEPTEUR

(43) Veröffentlichungstag der Anmeldung: 31.03.2004
(73) Patentinhaber: Infineon Technologies AG, 81669 München (DE)
(72) Erfinder: BAUR, Elmar, 93049 Regensburg (DE); HURT, Hans, 93049 Regensburg (DE); WITTL, Josef, 92331 Parsberg (DE)
(74) Vertreter: Müller, Wolfram Hubertus, Dr. Dipl.-Phys.
(86) Internationale Anmeldenummer: PCT/DE2001/002466
(87) Internationale Veröffentlichungsnummer: WO 2003/005613

(56) Entgegenhaltungen:
- WO-A-95/17053
- FR-A- 2 718 587
- US-A- 4 825 113

## Beschreibung

Die Erfindung betrifft ein opto-elektronisches Transceivermodul mit einer Koppeleinrichtung zum Ankoppeln mindestens eines optischen Netzwerkes über mindestens einen Lichtwellenleiter, einer opto-elektronischen Sendevorrichtung, die elektrische Datensignale erhält, in optische Datensignale umwandelt und diese über die Koppeleinrichtung in das optische Netzwerk sendet und einer opto-elektronischen Empfangsvorrichtung, die die optischen Datensignale, die über die Koppeleinrichtung aus dem optischen Netzwerk zum Transceivermodul gelangen, empfängt und in elektrische Datensignale umwandelt.

Außerdem betrifft die Erfindung ein Verfahren zum Empfang optischer Signale mit einem ersten Transceivermodul, das eine opto-elektronische Sende- und Empfangseinrichtung und eine Koppeleinrichtung zur Ankopplung an ein optisches Netzwerk umfasst, wobei die optischen Datensignale von einem zweiten Transceivermodul über das optische Netzwerk an das erste Transceivermodul gesendet werden.

Ein Transceivermodul nach dem Stand der Technik ist beispielsweise aus FR2718587 bekannt.

Derartige Transceivermodule kommen üblicherweise bei der bidirektionalen Übertragung von Daten in optischen Netzwerken zum Einsatz. Wenn nun die Sendevorrichtung des Transceivers, die beispielsweise eine LED oder einen Laser aufweist, optische Signale aussendet, so wird an jeder optischen Grenzfläche, auf die die Signale auf ihrem Weg treffen, ein gewisser Anteil des Signals reflektiert. Optische Steckverbindungen oder optischen Grenzflächen zum Ein- und Auskoppeln von Licht aus einem Wellenleiter weisen oftmals im optischen Weg der Lichtsignale eine nicht völlig vermeidbare sprunghafte Änderung des Brechungsindexes auf, die zwangsläufig zu Reflexionen führt.

Es ist nachteilhaft, wenn diese Reflexionen der Sendesignale zur Empfangsvorrichtung des opto-elektronischen Transceivers gelangen, da sie sich mit den Empfangssignalen überlagern und somit das Messergebnis verfälschen.

Damit die Bitfehlerrate trotz dieses optischen Übersprechens auf einem für die jeweilige Anwendung akzeptablen Niveau liegt, müssen die detektierten gewünschten Empfangssignale einen Leistungspegel aufweisen, der deutlich über dem Leistungspegel der ebenso detektierten unerwünschten Reflexionsanteile der Sendesignale liegt. Dadurch wird die Grenzempfindlichkeit des Transceivers erheblich herabgesetzt.

Eine bekannte technische Lösung zur Vermeidung dieses Phänomens ist der Einsatz unterschiedlicher optischer Trägerfrequenzen für die Sende- und die Empfangsfunktion des Transceivermoduls. Mittels frequenzselektiver Bauelemente, beispielsweise eines optischen Filters, können die unerwünschten Reflexionsanteile der Sendefrequenz vor der Empfangsvorrichtung eines Transceivermoduls heraus gefiltert werden. Auf diese Weise lässt sich das Übersprechen in der Größenordnung der Dämpfung des frequenzselektiven optischen Bauteils herabsetzen.

Nachteilhaft an dieser Lösung ist jedoch, dass ein zusätzliches optisches Bauteil in de Transceiveranordnung benötigt wird. Dies bringt einen erhöhten Herstellungsaufwand und somit auch höhere Kosten des Transceivers mit sich.

Der vorliegenden Erfindung liegt daher die Aufgabe zu Grunde, ein opto-elektronisches Transceivermodul und ein Verfahren zum Empfang optischer Signale an einem Transceivermodul bereitzustellen, die es ermöglichen, ohne den Einsatz eines frequenzselektiven optischen Bauteils das optische Übersprechen der Sendevorrichtung des Transceivermoduls auf die Empfangsvorrichtung möglichst einfach und effektiv zu unterdrücken.

Diese Aufgabe wird durch ein Transceivermodul mit den Merkmalen des Anspruchs 1 und ein Verfahren zum Empfang optischer Daten an einem Transceivermodul mit den Merkmalen des Anspruchs 15 gelöst.

Es wird ein Transceivermodul mit einer Koppeleinrichtung zum Ankoppeln mindestens eines Lichtwellenleiters mindestens eines optischen Netzwerkes bereitgestellt, wobei die Koppeleinrichtung und das angekoppelte optische Netzwerk eine spezifische Reflexions-Impulsantwort aufweist. Weiterhin umfasst das Transceivermodul eine opto-elektronische Sendevorrichtung, die elektrische Datensignale erhält, in optische Datensignale umwandelt und diese über die Koppeleinrichtung in das optische Netzwerk sendet und eine opto-elektronischen Empfangsvorrichtung, die die optischen Datensignale, die über die Koppeleinrichtung aus dem optischen Netzwerk zum Transceivermodul gelangen, empfängt und in elektrische Datensignale umwandelt. Erfindungsgemäß ist vorgesehen, dass das opto-elektronische Transceivermodul eine elektronische Kompensationsvorrichtung umfasst, die mittels charakteristischer Parameter der Reflexions-Impulsantwort der Koppeleinrichtung und/oder des optischen Netzwerkes und den elektrischen Datensignalen der Sendevorrichtung ein elektrisches Korrektursignal generiert und mit diesem Korrektursignal die von der Empfangsvorrichtung empfangenen elektrischen Datensignale korrigiert.

Auf diese Weise wird der an sich unerwünschte Effekt, dass optische Pulse, die die Sendevorrichtung eines Transceivermoduls aussendet, teilweise an Grenzflächen des optischen Netzwerkes reflektiert werden und anschließend zur Empfangsvorrichtung des Transceivermoduls gelangen, dazu ausgenutzt, eine aktive Korrektur der von der Empfangsvorrichtung empfangenen Datensignale aus dem angekoppelten optischen Netzwerk durchzuführen. Dadurch lässt sich das unerwünschte Störsignal vom Nutzsignal entkoppeln, so dass sich die Grenzempfindlichkeit der Empfangsvorrichtung des Transceivers deutlich erhöht.

Außerdem sind zusätzliche optische Bauelemente zur Verhinderung des unerwünschten Übersprechens der Sendesignale auf die Empfangssignale desselben Transceivermoduls nicht mehr notwendig, was einen vereinfachten und preisgünstigeren Aufbau des Transceivermoduls ermöglicht.

In einer vorteilhaften Ausgestaltung des Transceivermoduls weisen die von der Sendevorrichtung gesendeten Datensignale im wesentlichen die gleich Frequenz auf wie die von der Empfangsvorrichtung des Transceivermoduls empfangenen Datensignale. Aufgrund der erfindungsgemäßen Kompensationsvorrichtung des Transceivermoduls ist es nicht länger notwendig, für einen bi-direktionalen Sendebetrieb mittels zweier Transceivermodule verschiedene Frequenzen zu verwenden. Die unterschiedlichen Frequenzen wurden benötigt, um den Einsatz frequenzselektiver optischer Bauelemente zur Unterdrückung des Übersprechens vom Sende- auf den Empfangskanal ermöglichen. Mit im wesentlichen identischen optischen Sende- und Empfangsfrequenzen entfällt daher die Notwendigkeit, unterschiedliche Transceivermodule bereitzustellen, die jeweils hinsichtlich ihrer optischen Sende- bzw. Empfangsfrequenzen kompatibel zueinander sein mussten. Der Aufbau einer bidirektionalen optischen Datenübertragungsstrecke ist somit mittels zweier identischer Transceivermodule möglich, was die Kosten senkt und die Flexibilität beim Auf- und Umbau der optischen Systeme deutlich erhöht.

Mit Vorteil bestimmt die Kompensationsvorrichtung des Transceivermoduls die charakteristischen Parameter der Reflexions-Impulsantwort der Koppeleinrichtung und/oder des optischen Netzwerkes durch das Senden definierter Testsignale mittels der Sendevorrichtung, wobei die Empfangsvorrichtung die Reflexionsanteile dieser Testsignale zeit- und amplitudenaufgelöst empfängt. Dadurch lassen sich die spezifischen Parameter des an die Sendevorrichtung gekoppelten optischen Systems in einer Art Kalibriermessung bestimmen. Dazu umfasst die Kompensationsvorrichtung eine Auswerteeinrichtung, die aus dem Amplitudenverhältnis und aus dem Phasenverhältnis zwischen gesendeten Testsignalen und empfangenen Reflexionsanteilen dieser Testsignale Dämpfung und Phasenlage der Reflexions-Impulsantwort des angeschlossenen optischen Netzwerkes elektronisch bestimmt. Anhand dieser beiden charakteristischen Parameter lässt sich die Reflexions-Impulsantwort des an die Sendevorrichtung gekoppelten optischen Systems für ein beliebiges Signale berechnen.

Weiterhin weist die Kompensationsvorrichtung bevorzugt eine elektronische Speichereinrichtung zum Speichern der charakteristischen Parameter der Reflexions-Impulsantwort erlaubt. Auf die gespeicherten Werte kann die Kompensationsvorrichtung zurückgreifen, um die empfangenen Signale der Empfangsvorrichtung aktiv korrigieren zu können.

In einer Ausführungsform weist das erfindungsgemäße Transceivermodul eine kombinierte Sende-/Empfangsvorrichtung auf, wobei die kombinierte Sende-/Empfangsvorrichtung mittels eines einzigen Lichtwellenleiterabschnitts mit der Koppeleinrichtung zum Ankoppeln eines Lichtwellenleiters eines optischen Netzwerkes gekoppelt ist. Dadurch lässt sich der Aufbau der optischen und opto-elektronischen Bauelemente des Transceivermoduls weiter vereinfachen, weil beispielsweise auf einen optischen Koppler der Lichtwellenleiter bei räumlich getrennten Sende- und Empfangsvorrichtungen verzichtet werden kann.

Bevorzugt ist eine optische Faser als einziger Lichwellenleiterabschnitt vorgesehen, der mit der kombinierten Sende-/Empfangsvorrichtung stoßgekoppelt ist. Zusammen mit einer bevorzugten Ausbildung der kombinierten Sende-/Empfangsvorrichtung als LED kombiniert mit einer Photodiode stellt dieses Ausführungsbeispiel eine besonders kostengünstige und einfach herzustellende Variante des erfindungsgemäßen Transceivermoduls dar.

Die kombinierte LED und Photodiode ist bevorzugt mit einem optisch transparenten Kunstharz überzogen, wobei die Oberfläche des Harzes derart gekrümmt ist, dass von der LED emittiertes Licht auf den Kernbereich der optischen Faser fällt. Durch die refraktiven optischen Eigenschaften des Harzes lässt sich dadurch der Wirkungsgrad der Stoßkopplung steigern.

Es ist jedoch ebenso denkbar, die Empfangsvorrichtung und die Sendevorrichtung des Transceivermoduls räumlich getrennt anzuordnen. In einer solchen Ausführungsform sind sowohl die Sendevorrichtung als auch die Empfangsvorrichtung optisch jeweils an einen Lichtwellenleiterabschnitt gekoppelt, wobei die beiden Lichtwellenleiterabschnitte mittels eines optischen Koppelelementes zu einem einzigen Lichtwellenleiterabschnitt zusammengeführt sind, der an seinem Ende mit die Koppeleinrichtung des Transceivermoduls gekoppelt ist. Ein solcher Aufbau ist dann vorteilhaft, wenn sich die gewünschten opto-elektronischen Sende- und Empfangsvorrichtungen räumlich nicht oder nur nachteilhaft integrieren lassen. Dies kann insbesondere dann der Fall sein, wenn einmodige Lichtwellenleiter und schmalbandige Halbleiterlaser als Sendevorrichtung zum Einsatz kommen sollen.

Ein solcher Aufbau mit räumlich getrennten Sende- und Empfangsvorrichtungen weist bevorzugt ein optisches Koppelelement auf, das die aus dem optischen Netzwerk in den Transceiver gelangenden Datensignale bevorzugt zur Empfangsvorrichtung des Transceivermoduls leitet. Der Einsatz derartiger Richtkoppler stellt sicher, dass möglichst wenig der gesendeten Daten zu den Sendevorrichtungen des Transceivermoduls auf der Empfängerseite gelangt.

In einer Ausführungsform ist es vorteilhaft, die Kompensationsvorrichtung derart auszubilden, dass das generierte elektrische Korrektursignal vom elektrischen Datensignal der Empfangsvorrichtung subtrahiert wird. Dies setzt voraus, dass das optische Signal, das zur Empfangsvorrichtung gelangt, von dieser rein linear in ein elektrisches Signal gewandelt wird, was von der elektro-optischen Kennlinie der Empfangsvorrichtung abhängt.

Das Verfahren zum Empfang optischer Datensignale an einem ersten Transceivermodul mit einer opto-elektronischen Sende- und Empfangseinrichtung und einer Koppeleinrichtung zur Ankopplung an ein optisches Netzwerk, wobei die optischen Datensignale von einem zweiten Transceivermodul über das optische Netzwerk an das erste Transceivermodul gesendet werden, weist erfindungsgemäß die folgenden Schritte auf:
- Senden optischer Testsignale definierter Amplitude und Frequenz mittels des ersten Transceivermoduls,
- Empfangen der Reflexionsanteile der gesendeten optischen Testsignale mittels des ersten Transceivermoduls,
- Bestimmen charakteristischer Parameter der Reflexionseigenschaften durch Vergleich der gesendeten Testsignalen und der empfangenen Reflexionsanteile,
- Senden optischer Datensignale mittels des ersten Transceivermoduls,
- Senden optischer Datensignale mittels des zweiten Transceivermoduls,
- Empfangen optischer Signale mittels des ersten Transceivermoduls,
- Generieren eines Korrektursignals mittels der charakteristischen Parameter der Reflexionseigenschaften und der gesendeten optischen Datensignale des ersten Transceivermoduls,
- Korrigieren der empfangenen Signale mit dem Korrektursignal.

Das vorliegende Verfahren ist für beliebige optische Netzwerke, die an das Transceivermodul gekoppelt sind, universell anwendbar. Das Aussenden der Testsignale und der Empfang der Reflexionsanteile der Testsignale stellen eine Art Kalibriermessung für das angekoppelte optische Netzwerk dar. Diese Messung kann bei Bedarf jederzeit wiederholt werden, so dass die ermittelten Parameter der Reflexionseigenschaften der Kopplungseinrichtung und des angekoppelten optischen Netzwerkes jeweils den Eigenschaften des optischen Systems entsprechen.

Es ist vorteilhaft, wenn das Empfangen der Reflexionsanteile der gesendeten optischen Testsignale zeit- und amplitudenaufgelöst vorgenommen wird, so dass als charakteristische Parameter der Reflexionseigenschaften Dämpfung und Phasenlage der Reflexionsanteile im Vergleich zu den gesendeten optischen Testsignalen ermittelt werden.

Weiterhin werden die empfangenen optischen Signale bevorzugt in Echtzeit mit den Korrektursignalen korrigiert, so dass kein zusätzlicher Zeitversatz auf bei der Übertragung der Daten entsteht.

Es ist jedoch ebenso denkbar, dass die die empfangenen optischen Signale bei Bedarf erst nach einer zeitlichen Verzögerung mit den Korrektursignalen korrigiert werden.

Aus den bereits angeführten Gründen wird zum Senden der optischen Daten des ersten Transceivermoduls und zum Senden der optischen Daten des zweiten Transceivermoduls bevorzugt Licht im wesentlichen gleicher Wellenlänge verwendet.

Bevorzugte Ausführungsbeispiele des Transceivermoduls werden im folgenden beispielhaft anhand von Figuren erläutert.

Es zeigen:
- Figur 1: eine schematische Darstellung einer optischen Datenübertragungsstrecke mit zwei Transceivermodulen;
- Figur 2: eine schematische Darstellung eines erfindungsgemäßen Transceivermoduls;
- Figur 3: eine zweite Ausführungsform eines erfindungsgemäßen Transceivermoduls mit kombinierter Sende-/Empfangsvorrichtung;
- Figur 4a: eine Detailansicht einer Ausführungsform der kombinierten Sende-/Empfangsvorrichtung der Figur 3;
- Figur 4b: eine weitere Ausführungsform einer Sende/Empfangsvorrichtung entsprechend Figur 3;
- Figur 5: eine dritte Ausführungsform eines Transceivermoduls mit räumlich getrennten Sende- und Empfangsvorrichtungen und
- Figur 6: eine schematische Darstellung des Signalverlaufs der gesendeten und empfangenen Signale der Transceivermodule eines erfindungsgemäßen Verfahrens zum Empfang optischer Signale.

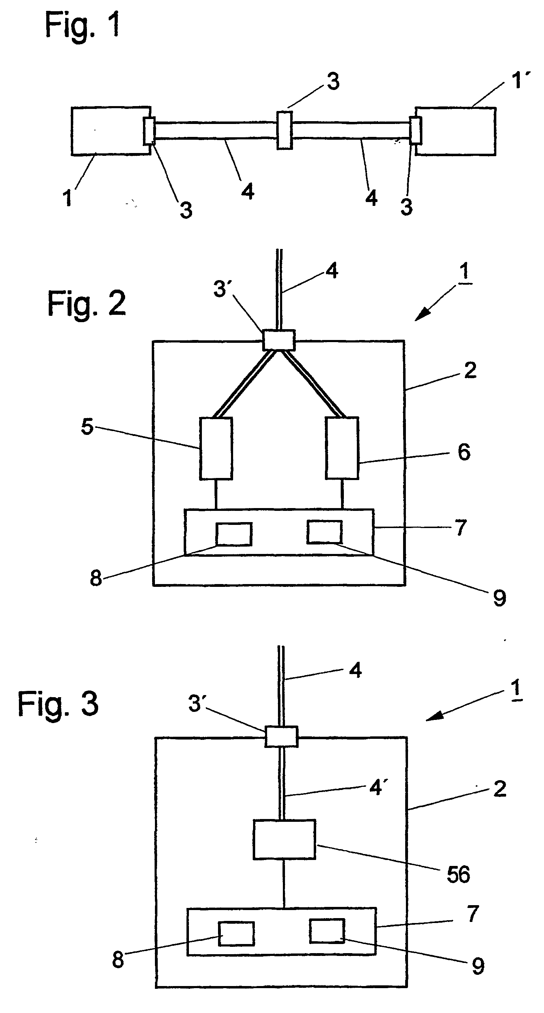

In Figur 1 ist sind zwei opto-elektronische Transceivermodule 1, 1' dargestellt, die über Lichtwellenleiter 4 miteinander gekoppelt sind. Beide Transceivermodule 1, 1' weisen opto-elektronische Sendevorrichtungen auf, deren Licht in den jeweiligen Wellenleiter 4 eingekoppelt wird. Gleichzeitig umfasst jedes Transceivermodul 1, 1' eine Empfangsvorrichtung, die die gesendeten Lichtsignale des jeweils anderen Transceivermoduls empfängt. Dadurch ist das optische System zum bidirektionalen Senden- und Empfangen optischer Daten ausgelegt.

An Koppeleinrichtungen 3, die beispielsweise als optische Steckerverbindungen ausgebildet sind, kommt es aufgrund des plötzlichen Brechzahlsprunges an der Stirnfläche der Lichtwellenleiter zwangsläufig zu Reflexionen. Daher werden insbesondere die gesendeten Signale der Transceivermodule 1, 1' an derartigen Koppelbereichen 3 teilweise reflektiert und gelangen auf diesem Wege zurück in die Transceivermodule 1, 1'. Wenn die reflektierten Signalanteile zu den Empfangseinrichtungen gelangen, wirken sie sich störend aus, weil sie sich bei der opto-elektrischen Wandlung mit den gewünschten Empfangssignalen überlagern. Dieses Übersprechen des Sendesignals auf das Empfangssignal setzt die Grenzempfindlichkeit des Detektors der Empfangsvorrichtung erheblich herab. Dies liegt darin begründet, dass bei einer digitalen Übertragung ein ausreichender Pegelabstand zwischen dem übersprechenden Signal und dem gewünschten Empfangssignal gegeben sein muss, um die Anforderungen an die Bitfehlerrate erfüllen zu können.

Figur 2 zeigt eine schematische Darstellung des erfindungsgemäßen Transceivermoduls 1. In einem gemeinsamen Gehäuse 2 sind eine opto-elektronische Sendevorrichtung 5 und opto-elektronische Empfangsvorrichtung 6 getrennt voneinander angeordnet. Beide Vorrichtungen sind optisch über Lichtwellenleiterabschnitte an eine optische Koppeleinrichtung 3' gekoppelt, die vorzugsweise an einer Außenwand des Gehäuses angeordnet ist. Diese Koppeleinrichtung 3' ermöglicht den Anschluss mindestens eines Lichtwellenleiters 4 mindestens eines optischen Netzwerkes. Die Lichtwellenleiter können dabei sowohl als Faserwellenleiter als auch als integriert optische Wellenleiter ausgebildet sein.

Im Gehäuse 2 ist weiterhin eine elektronische Kompensationsvorrichtung 7 angeordnet, die mit der Sendevorrichtung 5 und der Empfangsvorrichtung 6 elektronisch gekoppelt ist. Diese Kompensationsvorrichtung umfasst eine Auswerteeinrichtung 8 und eine Speichereinrichtung 9. Die Auswerteeinrichtung 8 setzt die Amplitudenpegel und die Phasenlagen der von der Sendevorrichtung 5 gesendeten Testsignale mit den von der Empfangsvorrichtung 6 empfangenen Reflexionsanteilen der gesendeten Testsignale ins Verhältnis. Auf diese Weise lassen sich die Reflexionseigenschaften des an die Sendevorrichtung gekoppelten optischen Systems, das den Lichtwellenleiterabschnitt bis hin zur Koppeleinrichtung 3' und das dort angekoppelte optische Netzwerk umfasst, bestimmen. Dazu gehören üblicherweise Dämpfung und Phasenverschiebung. Je nach Anzahl der Reflexionsbereiche und der Dämpfung des optischen Systems kann ein einziger ausgesendeter Impuls eine Vielzahl von (Mehrfach)Reflexionen auslösen, die mit der Empfangsvorrichtung messbar sind. Dieses "Echo" des Impulses wird als sogenannte Reflexions-Impulsantwort bezeichnet. Wenn die charakteristischen Parameter der Reflexions-Impulsantwort, wie Dämpfung und Phasenverschiebung, bekannt sind, ist es auf einfache Weise möglich, mit der Kompensationsvorrichtung 7 aus den elektrischen Sendesignalen der Sendevorrichtung 5 das elektrische Störsignal der reflektierten Anteile der Sendesignale zu generieren. Mit diesem generierten Störsignal ist es möglich, auf elektronischem Wege das elektrische Empfangssignal der Empfangsvorrichtung 6 zu korrigieren. Falls die Empfangsvorrichtung eine lineare Kennlinie hinsichtlich der elektro-optischen Wandlung aufweist und die auftretenden optischen Intensitäten in diesem linearen Bereich liegen, lässt sich das elektrische Empfangssignal durch elektronische Subtraktion des generierten Störsignales korrigieren.

Diese Korrektur ist grundsätzlich auch bei einem nichtlinearen Betrieb oder einer nichtlinearen Kennlinie der Empfangsvorrichtung möglich. Dabei muss die Kompensationsvorrichtung die nichtlinearen Eigenschaften der Empfangsvorrichtung kennen und in Abhängigkeit von der Intensität des generierten Störsignals entsprechend berücksichtigen.

In Figur 3 ist eine zweite Ausführungsform des Transceivermoduls 1 dargestellt. Im Unterschied zu der in Figur 2 gezeigten ersten Ausführungsform ist eine kombinierte opto-elektronische Sende-/Empfangsvorrichtung 56 vorgesehen. Dadurch reicht ein einziger Lichtwellenleiterabschnitt 4' aus, um die kombinierte Sende-/Empfangsvorrichtung 56 optisch an die Koppeleinrichtung 3' zu koppeln.

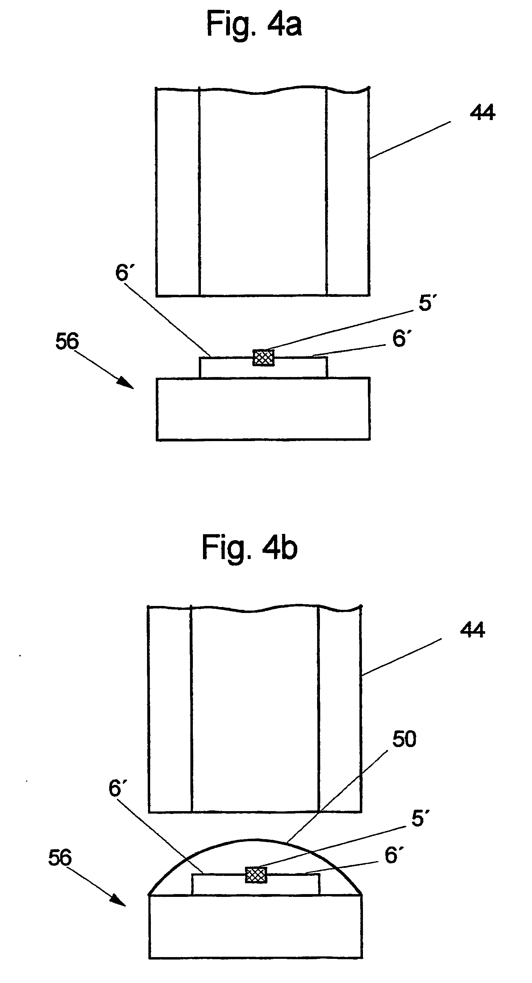

Eine mögliche Ausführungsform einer kombinierten Sende-/Empfangsvorrichtung 56 ist in Figur 4a dargestellt. Als Lichtwellenleiterabschnitt ist eine optische Faser 44 vorgesehen, deren Stirnfläche mit der kombinierten Sende-/Empfangsvorrichtung 56 stoßgekoppelt ist. Die kombinierte Sende-/Empfangsvorrichtung 56 umfasst eine LED 5' und eine Photodiode 6', die beispielsweise in Hybridtechnologie ineinander integriert gefertigt sind. Aufgrund der dadurch realisierbaren geringen geometrischen Maße ist es möglich die Lichtleitfaser 44 mit ihrer polierten Stirnfläche direkt mit der kombinierten Sende-/Empfangsvorrichtung 56 auf Stoß zu koppeln. Insbesondere beim Einsatz mehrmodiger Lichtleitfasern, insbesondere aus Kunststoff, stellt die dargestellte optische Kopplung der kombinierten Sende- und Empfangsvorrichtung eine kostengünstige Ausführungsform des erfindungsgemäßen Transceivermoduls dar.

Die gleiche Variante der Kopplung ist jedoch grundsätzlich auch für einmodige Faserwellenleiter denkbar. Als Sendevorrichtung 5' sind ebenso schmalbandige Laserdioden oder VCSEL einsetzbar. Bei derartigen Komponenten kann sich auch ein monolithischer Aufbau von LED, Laserdiode oder VCSEL und zugehöriger Photodiode anbieten.

Figur 4b zeigt eine Abwandlung der in Figur 4a dargestellten optischen Kopplung. Dabei sind die Sendevorrichtung 5' und die Empfangsvorrichtung 6' mit einem optisch transparenten Kunstharz überzogen. Dieser Kunstharzüberzug, der oftmals zum Schutz der opto-elektronischen Komponenten eingesetzt wird, weist eine Krümmung auf, die das von der Sendevorrichtung 5' gesendeten Licht auf den Kernbereich der Lichtleitfaser 44 und umgekehrt die zu empfangenen Lichtsignale vom Kernbereich der Lichtleitfaser auf die Empfangsvorrichtung 6' lenkt. Dadurch lässt sich die optische Kopplungseffizienz erhöhen. Weiterhin ist auch denkbar, ein indexangepasstes Gel zwischen die Stirnfläche der Lichtleitfaser 44 und die Kunstharzschicht einzubringen.

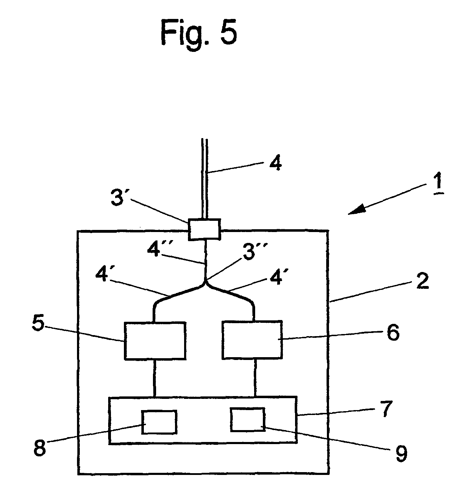

Figur 5 zeigt den schematischen Aufbau einer dritten Ausführungsform eines Transceivermoduls 1. Im wesentlichen gleicht der Aufbau, der in Figur 2 dargestellten ersten Ausführungsform. Daher sind gleiche Bauelemente mit gleichen Bezugsziffern versehen. Im Unterschied zu dem in Figur 2 dargestellten Transceivermodul sind sowohl die Sendevorrichtung 5 als auch die Empfangsvorrichtung 6 optisch an Lichtwellenleiterabschnitte 4' gekoppelt. Diese Lichtwellenleiterabschnitte 4' sind dann über ein gemeinsames optisches Koppelelement 3' an einen weiteren Lichtwellenleiterabschnitt 4" gekoppelt dessen anderes Ende an die am Gehäuse angeordnete Koppeleinrichtung 3' gekoppelt ist. Als optisches Koppelelement 3' kommen insbesondere Richtkoppler in Frage, die die zu empfangenden Signale aus dem optischen Netzwerk bevorzugt zur Empfangsvorrichtung leiten. Aber auch der Einsatz eines einfachen integriert optischen Y-Verzweigers oder eines Schmelzkopplers für Faserwellenleiter ist möglich.

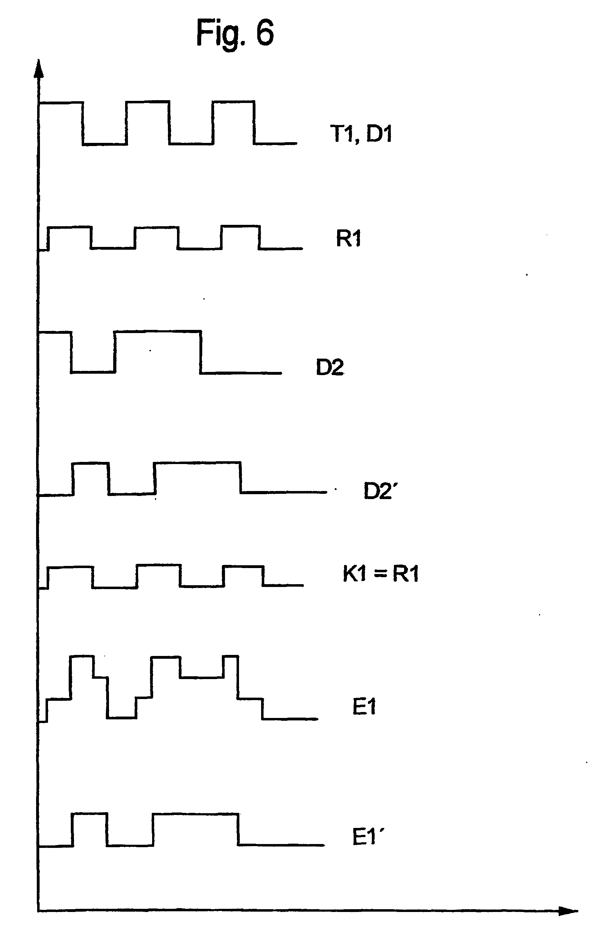

Figur 6 zeigt schematisch anhand von Signalverläufen die Funktionsweise des erfindungsgemäßen Verfahrens. Mittels des ersten Transceivermoduls wird eine Testsignalfolge T1 ausgesendet, deren Reflexionsanteil R1 phasenverschoben und mit gedämpfter Amplitude vom ersten Transceivermodul detektiert werden. Zur einfacheren Darstellung weist das an das an die Empfangsvorrichtung des Transceivermoduls gekoppelte optische System im vorliegenden Fall lediglich einen Reflexionsbereich auf, so dass jeder Testpuls der Folge T1 nur einen Reflexionspuls im Signal R1 verursacht. Wie bereits erläutert, werden anhand der Amplitudenverhältnisse und der Phasenlagen zwischen den Signalen T1 und R1 die Dämpfung und die Phasenverschiebung der Reflexions-Impulsantwort des angekoppelten optischen Systems bestimmt.

Das zweite Transceivermodul sendet Datensignale D2. Diese gelangen nach einer gewissen Laufzeit, die zu einer Phasenverschiebung führt, als Signale D2' zum ersten Transceivermodul. Das erste Transceivermodul sendet gleichzeitig Datensignale D1, die der Einfachheit halber identisch zu der Testsignalfolge T1 gewählt sind. Das erste Transceivermodul empfängt daher die im vorliegenden Fall lineare Superposition der Signale D2' und R1, was zu einem gestörten Empfangssignal E1 führt.

Das zu generierende Korrektursignal K1 entspricht der Reflexionsantwort der Datensignale D1 also dem Signal R1. Wenn nun das Signal R1 vom Signal E1 subtrahiert wird, erhält man das gewünschte Empfangssignal E1' des ersten Transceivermoduls, das den gesendeten Daten des zweiten Transceivermoduls entspricht.

Wie bereits erwähnt ist das Verfahren grundsätzlich auch für optische Systeme anwendbar, die komplexere Reflexions-Impulsantworten mit Mehrfachreflexionen aufweisen. Außerdem kann eine nichtlineare opto-elektronische Empfangsvorrichtung mit Kenntnis dessen nichtlinearer Kennlinie bei der Korrektur des Empfangssignales E1 berücksichtigt werden.

Weiterhin ist es selbstverständlich zweckmäßig, das beschriebene Verfahren in einer bidirektionalen Übertragungsstrecke für beiden Transceivermodule einzusetzen.

### Bezugszeichenliste

- 1, 1': Transceivermodul
- 2: Gehäuse
- 3: Koppelbereich
- 3': Koppeleinrichtung
- 3 ": Koppelelement
- 4: Lichtwellenleiter
- 4', 4": Lichwellenleiterabschnitt
- 5: Sendevorrichtung
- 5': lichtemittierende Diode LED
- 6: Empfangsvorrichtung
- 6': Photodiode
- 7: Kompensationsvorrichtung
- 8: Auswerteeinrichtung
- 9: Speichereinrichtung
- 44: Faserwellenleiter
- 56: kombinierte Sende-/Empfangsvorrichtung
- T1: Testsignale der Sendevorrichtung des ersten Transceivermoduls
- D1: Datensignale der Sendevorrichtung des ersten Transceivermoduls
- R1: Reflexionsanteil des Signals T1 bzw. D1 an der Empfangsvorrichtung des ersten Transceivermoduls
- D2: gesendete Datensignale des zweiten Transceivermoduls
- D2': Datensignal D2 an der Empfangsvorrichtung des ersten Transceivermoduls
- K1, R1: generiertes Korrektursignal für das Datensignal D1
- E1: Empfangssignal an der Empfangsvorrichtung des ersten Transceivermoduls
- E1': korrigiertes Empfangssignal der Empfangsvorrichtung des ersten Transceivermoduls

## Patentansprüche

1. Opto-elektronisches Transceivermodul (1) mit:
- einer Koppeleinrichtung (3') zum Ankoppeln mindestens eines Lichtwellenleiters (4) mindestens eines optischen Netzwerkes, wobei die Koppeleinrichtung und das angekoppelte optische Netzwerk eine spezifische Reflexions-Impulsantwort aufweisen,
- einer opto-elektronischen Sendevorrichtung (5), die elektrische Datensignale erhält, in optische Datensignale umwandelt und diese über die Koppeleinrichtung (3') in das optische Netzwerk sendet und
- einer opto-elektronischen Empfangsvorrichtung (6), die die optischen Datensignale, die über die Koppeleinrichtung (3') aus dem optischen Netzwerk zum Transceivermodul (1) gelangen, empfängt und in elektrische Datensignale umwandelt,
**dadurch gekennzeichnet,**
**dass** das opto-elektronische Transceivermodul (1) eine elektronische Kompensationsvorrichtung (7) umfasst, die mittels charakteristischer Parameter der Reflexions-Impulsantwort der Koppeleinrichtung (3') und/oder des optischen Netzwerkes und den elektrischen Datensignalen der Sendevorrichtung (5) ein elektrisches Korrektursignal generiert und mit diesem Korrektursignal die von der Empfangsvorrichtung empfangenen elektrischen Datensignale korrigiert.

2. Opto-elektronisches Transceivermodul nach Anspruch 1, **dadurch gekennzeichnet, dass** das Licht der von der Sendevorrichtung (5) gesendeten optischen Datensignale und das Licht der von der Empfangsvorrichtung (6) empfangenen optischen Datensignale eine im wesentlichen gleiche Wellenlänge aufweist.

3. Opto-elektronisches Transceivermodul nach Anspruch 1 oder 2, **dadurch gekennzeichnet, dass** die Kompensationsvorrichtung (7) die charakteristischen Parameter der Reflexions-Impulsantwort der Koppeleinrichtung (3') und/oder des optischen Netzwerkes durch das Senden definierter Testsignale mittels der Sendevorrichtung (5) und das zeitaufgelöste und amplitudenaufgelöste Empfangen der Reflexionsanteile dieser Testsignale mittels der Empfangsvorrichtung (6) bestimmt.

4. Opto-elektronisches Transceivermodul nach Anspruch 3, **dadurch gekennzeichnet, dass** die Kompensationsvorrichtung (7) eine Auswerteeinrichtung (8) umfasst, die aus dem Amplitudenverhältnis und aus dem Phasenverhältnis zwischen gesendeten Testsignalen und empfangenen Reflexionsanteilen dieser Testsignale Dämpfung und Phasenlage der Reflexions-Impulsantwort des angeschlossenen optischen Netzwerkes elektronisch bestimmt.

5. Opto-elektronisches Transceivermodul nach Anspruch 3 oder 4, **dadurch gekennzeichnet, dass** die Kompensationsvorrichtung (7) eine elektronische Speichereinrichtung (9) zum Speichern der charakteristischen Parameter der Reflexions-Impulsantwort umfasst.

6. Opto-elektronisches Transceivermodul nach einem der Ansprüche 1 bis 5, **dadurch gekennzeichnet, dass** das Transceivermodul (1) eine kombinierte Sende-/Empfangsvorrichtung (56) aufweist und ein einziger Lichtwellenleiterabschnitt (4') mit der kombinierten Sende-/Empfangsvorrichtung (56) und der Koppeleinrichtung (3') zum Ankoppeln eines Lichtwellenleiters (4) eines optischen Netzwerkes optisch gekoppelt ist.

7. Opto-elektronisches Transceivermodul nach Anspruch 6, **dadurch gekennzeichnet, dass** eine optische Faser (44) als Lichtwellenleiterabschnitt vorgesehen ist, der mit der kombinierten Sende-/Empfangsvorrichtung (56) stoßgekoppelt ist.

8. Opto-elektronisches Transceivermodul nach Anspruch 7, **dadurch gekennzeichnet, dass** eine Kombination aus einer LED (5') und einer Photodiode (6') als kombinierte Sende-/Empfangsvorrichtung (56) vorgesehen ist.

9. Opto-elektronisches Transceivermodul nach Anspruch 8, **dadurch gekennzeichnet, dass** die LED (5') und die Photodiode (6') mit einem optisch transparenten Kunstharz (50) überzogen sind, wobei die Oberfläche des Kunstharzes (50) derart gekrümmt ist, dass von der LED (5') emittierte Licht auf den Kernbereich der optischen Faser (44) fällt.

10. Opto-elektronisches Transceivermodul nach einem der Ansprüche 1 bis 5, **dadurch gekennzeichnet, dass** die Sendevorrichtung (5) und die Empfangsvorrichtung (6) räumlich getrennt voneinander angeordnet sind.

11. Opto-elektronisches Transceivermodul nach Anspruch 10, **dadurch gekennzeichnet, dass** sowohl die Sendevorrichtung (5) als auch die Empfangsvorrichtung (6) optisch jeweils an einen Lichtwellenleiterabschnitt (4', 4') gekoppelt ist, wobei die beiden Lichtwellenleiterabschnitte (4', 4') mittels eines optischen Koppelelementes (3") zu einem einzigen Lichtwellenleiterabschnitt (4") zusammengeführt sind, der an seinem Ende mit der Koppeleinrichtung (3') zum Ankoppeln eines weiteren Lichtwellenleiters (4) eines optischen Netzwerkes an das Transceivermodul (1) gekoppelt ist.

12. Opto-elektronisches Transceivermodul nach Anspruch 11, **dadurch gekennzeichnet, dass** das optische Koppelelement (3") optische Datensignale, die aus dem optischen Netzwerk in das Transceivermodul (1) gelangen, bevorzugt zur Empfangsvorrichtung (6) des Transceivermoduls (1) lenkt.

13. Opto-elektronisches Transceivermodul nach einem der Ansprüche 1 bis 12 , **dadurch gekennzeichnet, dass** die Kompensationsvorrichtung (7) das generierte elektrische Korrektursignal vom elektrischen Datensignal der Empfangsvorrichtung subtrahiert.

14. Opto-elektronisches Transceivermodul nach einem der Ansprüche 1 bis 12 , **dadurch gekennzeichnet, dass** die Sendevorrichtung (5), die Empfangsvorrichtung (6) und die Kompensationsvorrichtung (7) in einem gemeinsamen Gehäuse (2) angeordnet sind, wobei die Koppeleinrichtung (3') den Anschluss des Lichtwellenleiters (4) an das Gehäuse (2) erlaubt.

15. Verfahren zum Empfang optischer Datensignale an einem ersten Transceivermodul mit einer opto-elektronischen Sende- und Empfangseinrichtung und einer Koppeleinrichtung zur Ankopplung an ein optisches Netzwerk, wobei die optischen Datensignale von einem zweiten Transceivermodul über das optische Netzwerk an das erste Transceivermodul gesendet werden,
**gekennzeichnet durch**
die Schritte:
- Senden optischer Testsignale (T1) definierter Amplitude und Frequenz mittels des ersten Transceivermoduls,
- Empfangen der Reflexionsanteile (R1) der gesendeten optischen Testsignale (T1) mittels des ersten Transceivermoduls,
- Bestimmen charakteristischer Parameter der Reflexionseigenschaften **durch** Vergleich der gesendeten Testsignalen (T1) und der empfangenen Reflexionsanteile (R1),
- Senden optischer Datensignale (D1) mittels des ersten Transceivermoduls,
- Senden optischer Datensignale (D2) mittels des zweiten Transceivermoduls,
- Empfangen optischer Signale (E1) mittels des ersten Transceivermoduls,
- Generieren eines Korrektursignals (K1) mittels der charakteristischen Parameter der Reflexionseigenschaften und der gesendeten optischen Daten des ersten Transceivermoduls, und
- Korrigieren der empfangenen Signale (E1) mit dem Korrektursignal (K1).

16. Verfahren zum Empfang optischer Datensignale gemäß Anspruch 15, **dadurch gekennzeichnet, dass** das Empfangen der Reflexionsanteile (R1) der gesendeten optischen Testsignale (T1) zeit- und amplitudenaufgelöst vorgenommen wird.

17. Verfahren zum Empfang optischer Datensignale gemäß Anspruch 16, **dadurch gekennzeichnet, dass** als charakteristische Parameter der Reflexionseigenschaften Dämpfung und Phasenlage der Reflexionsanteile (R1) im Vergleich zu den gesendeten optischen Testsignalen (T1) ermittelt werden.

18. Verfahren zum Empfang optischer Datensignale nach einem der Ansprüche 15 bis 17, **dadurch gekennzeichnet, dass** die empfangenen optischen Signale (E1) in Echtzeit mit den Korrektursignalen (K1) korrigiert werden.

19. Verfahren zum Empfang optischer Datensignale nach einem der Ansprüche 15 bis 17, **dadurch gekennzeichnet, dass** die empfangenen optischen Signale (E1) nach einer zeitlichen Verzögerung mit den Korrektursignalen (K1) korrigiert werden.

20. Verfahren zum Empfang optischer Datensignale nach einem der Ansprüche 15 bis 19, **dadurch gekennzeichnet, dass** zum Senden der optischen Daten (D1) des ersten Transceivermoduls und zum Senden der optischen Daten (D2) des zweiten Transceivermoduls Licht im wesentlichen gleicher Wellenlänge verwendet wird.

## Claims

1. Optoelectronic transceiver module (1) having:
- a coupling device (3') for coupling at least one optical waveguide (4) of at least one optical network, in which the coupling device and the coupled optical network have a specific reflection impulse response,
- an optoelectronic transmitting apparatus (5), which receives electrical data signals, converts them into optical data signals, and sends these via the coupling device (3') to the optical network, and
- an optoelectronic receiving apparatus (6), which receives the optical data signals which are passed via the coupling device (3') from the optical network to the transceiver module (1), and converts them to electrical data signals,
**characterized**
**in that** the optoelectronic transceiver module (1) has an electronic compensation apparatus (7), which uses the characteristic parameters of the reflection impulse response of the coupling device (3') and/or of the optical network and the electrical data signals of the transmitting apparatus (5) to generate an electrical correction signal, and uses this correction signal to correct the electrical data signals received by the receiving apparatus.

2. Optoelectronic transceiver module according to Claim 1,
**characterized in that** the light of the optical data signals sent by the transmitting apparatus (5) and the light of the optical data signals received by the receiving apparatus (6) are at essentially the same wavelength.

3. Optoelectronic transceiver module according to Claim 1 or 2, **characterized in that** the compensation apparatus (7) determines the characteristic parameters of the reflection impulse response of the coupling device (3') and/or of the optical network by sending defined test signals by means of the transmitting apparatus (5) and receiving the reflected elements of these test signals, resolved on the basis of time and amplitude, by means of the receiving apparatus (6).

4. Optoelectronic transceiver module according to Claim 3,
**characterized in that** the compensation apparatus (7) has an evaluation device (8) which uses the amplitude ratio and the phase relationship between transmitted test signals and received reflected elements of these test signals to determine electronically the attenuation and phase angle of the reflection impulse response of the connected optical network.

5. Optoelectronic transceiver module according to Claim 3 or 4, **characterized in that** the compensation apparatus (7) has an electronic memory device (9) for storing the characteristic parameters of the reflection impulse response.

6. Optoelectronic transceiver module according to one of Claims 1 to 5, **characterized in that** the transceiver module (1) has a combined transmitting/ receiving apparatus (56), and a single optical waveguide section (4') is optically coupled to the combined transmitting/receiving apparatus (56) and to the coupling device (3') for coupling an optical waveguide (4) of an optical network.

7. Optoelectronic transceiver module according to Claim 6,
**characterized in that** an optical fibre (44) is provided as the optical waveguide section, and is butt-coupled to the combined transmitting/receiving apparatus (56).

8. Optoelectronic transceiver module according to Claim 7, **characterized in that** a combination of an LED (5') and a photodiode (6') is provided as the combined transmitting/receiving apparatus (56).

9. Optoelectronic transceiver module according to Claim 8, **characterized in that** the LED (5') and the photodiode (6') are coated with an optically transparent synthetic resin (50), with the surface of the synthetic resin (50) being curved in such a manner that light emitted from the LED (5') falls on the core area of the optical fibre (44).

10. Optoelectronic transceiver module according to one of Claims 1 to 5, **characterized in that** the transmitting apparatus (5) and the receiving apparatus (6) are arranged physically separated from one another.

11. Optoelectronic transceiver module according to Claim 10, **characterized in that** both the transmitting apparatus (5) and the receiving apparatus (6) are optically coupled to a respective optical waveguide section (4', 4'), with the two optical waveguide sections (4', 4') being combined by means of an optical coupling element (3") to form a single optical waveguide section (4"), which is coupled at its end to the coupling device (3'), in order to couple a further optical waveguide (4) of an optical network to the transceiver module (1).

12. Optoelectronic transceiver module according to Claim 11, **characterized in that** the optical coupling element (3") carries optical data signals, which are passed from the optical network into the transceiver module (1), preferably to the receiving apparatus (6) in the transceiver module (1).

13. Optoelectronic transceiver module according to one of Claims 1 to 12, **characterized in that** the compensation apparatus (7) subtracts the generated electrical correction signal from the electrical data signal of the receiving apparatus.

14. Optoelectronic transceiver module according to one of Claims 1 to 12, **characterized in that** the transmitting apparatus (5), the receiving apparatus (6) and the compensation apparatus (7) are arranged in a common housing (2), with the coupling device (3') allowing the optical waveguide (4) to be connected to the housing (2).

15. Method for receiving optical data signals at a first transceiver module having an optoelectronic transmitting and receiving device and having a coupling device for coupling to an optical network, with the optical data signals being sent from a second transceiver module via the optical network to the first transceiver module,
**characterized by**
the following steps:
- transmission of optical test signals (T1) at a defined amplitude and frequency by means of the first transceiver module,
- reception of the reflected elements (R1) of the transmitted optical test signals (T1) by means of the first transceiver module,
- determination of characteristic parameters of the reflection characteristics by comparison of the transmitted test signals (T1) and the received reflected elements (R1),
- transmission of optical data signals (D1) by means of the first transceiver module,
- transmission of optical data signals (D2) by means of the second transceiver module,
- reception of optical signals (E1) by means of the first transceiver module,
- generation of a correction signal (K1) by means of the characteristic parameters of the reflection characteristics and of the transmitted optical data from the first transceiver module, and
- correction of the received signals (E1) using the correction signal (K1).

16. Method for receiving optical data signals according to Claim 15, **characterized in that** the reflected elements (R1) of the transmitted optical test signals (T1) are received resolved on the basis of time and amplitude.

17. Method for receiving optical data signals according to Claim 16, **characterized in that** the attenuation and phase angle of the reflected elements (R1) are determined, in comparison to the transmitted optical test signals (T1), as characteristic parameters of the reflection characteristics.

18. Method for receiving optical data signals according to one of Claims 15 to 17, **characterized in that** the received optical signals (E1) are corrected in real time using the correction signals (K1).

19. Method for receiving optical data signals according to one of Claims 15 to 17, **characterized in that** the received optical signals (E1) are corrected after a time delay using the correction signals (K1).

20. Method for receiving optical data signals according to one of Claims 15 to 19, **characterized in that** light at essentially the same wavelength is used for transmitting the optical data (D1) from the first transceiver module and for transmitting the optical data (D2) from the second transceiver module.

## Revendications

1. Module (1) émetteur-récepteur optoélectronique comprenant :
- un dispositif (3') de couplage pour coupler au moins un guide (4) d'onde lumineuse d'au moins un réseau optique, le dispositif de couplage et le réseau optique couplé ayant une réponse impulsionnelle en réflexion spécifique,
- un dispositif (5) d'émission optoélectronique qui reçoit des signaux électriques de données, les transforme en des signaux optiques de données et envoie ceux-ci dans le réseau optique en passant par le réseau (3') de couplage et
- un dispositif (6) de réception optoélectronique qui reçoit les signaux optiques de données qui arrivent du réseau optique au module (1) émetteur-récepteur en passant par le dispositif (3') de couplage et les transforme en des signaux électriques de données,
**caractérisé,**
**en ce que** le module (1) émetteur-récepteur optoélectronique comprend un dispositif (7) électronique de compensation qui, au moyen de paramètres caractéristiques de la réponse impulsionnelle en réflexion du dispositif (3') de couplage et/ou du réseau optique et des signaux électriques de données du dispositif (5) d'émission, engendre un signal électrique de correction et corrige par ce signal de correction les signaux électriques de données reçus par le dispositif de réception.

2. Module émetteur-récepteur optoélectronique selon la revendication 1, **caractérisé en ce que** la lumière des signaux optiques de données émis par le dispositif (5) d'émission et la lumière des signaux optiques de données reçus par le dispositif (6) de réception ont une longueur d'onde qui est sensiblement la même.

3. Module émetteur-récepteur optoélectronique selon la revendication 1 ou 2, **caractérisé en ce que** le dispositif (7) de compensation détermine les paramètres caractéristiques de la réponse impulsionnelle en réflexion du dispositif (3') de couplage et/ou du réseau optique par l'émission de signaux de test définis au moyen du dispositif (5) d'émission et par la réception résolue dans le temps et résolue en amplitude des composantes de réception de ces signaux de test au moyen du dispositif (6) de réception.

4. Module émetteur-récepteur optoélectronique selon la revendication 3, **caractérisé en ce que** le dispositif (7) de compensation comprend un dispositif (8) d'évaluation qui détermine électroniquement à partir du rapport des amplitudes et du rapport des phases entre les signaux de test émis et les composantes de réflexion reçues de ces signaux de test l'atténuation et la position en phase de la réponse impulsionnelle en réflexion du réseau optique raccordé.

5. Module émetteur-récepteur optoélectronique selon la revendication 3 ou 4, **caractérisé en ce que** le dispositif (7) de compensation comprend un dispositif (9) électronique de mémoire pour la mémorisation des paramètres caractéristiques de la réponse impulsionnelle en réflexion.

6. Module émetteur-récepteur optoélectronique selon l'une des revendications 1 à 5, **caractérisé en ce que** le module (1) émetteur-récepteur comporte un dispositif (56) combiné d'émission/réception et un tronçon (4') unique de guide d'onde lumineuse et couplé optiquement au dispositif (56) combiné d'émission/réception et le dispositif (3') de couplage d'un guide (4) d'onde lumineuse d'un réseau optique.

7. Module émetteur-récepteur optoélectronique selon la revendication 6, **caractérisé en ce qu'**il est prévu comme tronçon de guide d'onde lumineuse une fibre (44) optique qui est couplée bout à bout au dispositif (56) combiné d'émission/réception.

8. Module émetteur-récepteur optoélectronique selon la revendication 7, **caractérisé en ce qu'**il est prévu une combinaison d'une LED (5') et d'une photodiode (6') comme dispositif (56) combiné d'émission/réception.

9. Module émetteur-récepteur optoélectronique selon la revendication 8, **caractérisé en ce que** la LED (5') et la photodiode (6') sont revêtues d'une résine (50) de matière plastique transparente du point de vue optique, la surface de la résine (50) en matière plastique étant courbée de façon à ce que de la lumière émise par la LED (5') arrive sur la zone de coeur de la fibre (44) optique.

10. Module émetteur-récepteur optoélectronique selon la revendication 1 à 5, **caractérisé en ce que** le dispositif (5) d'émission et le dispositif (6) de réception sont disposés en étant séparés l'un de l'autre dans l'espace.

11. Module émetteur-récepteur optoélectronique selon la revendication 10, **caractérisé en ce que** tant le dispositif (5) d'émission que le dispositif (6) de réception sont couplés optiquement respectivement à un tronçon (4',4') de guide d'onde lumineuse, les deux tronçons (4',4') de guide d'onde lumineuse étant rassemblés au moyen d'un élément (3") de couplage optique en un tronçon (4") de guide d'onde lumineuse unique qui est couplé à son extrémité au dispositif (3') de couplage pour le couplage d'un autre guide (4) d'onde lumineuse d'un réseau optique au module (1) émetteur-récepteur.

12. Module émetteur-récepteur optoélectronique selon la revendication 11, **caractérisé en ce que** l'élément (3") de couplage optique dirige des signaux optiques de données qui arrivent du réseau optique au module (1) émetteur-récepteur de préférence vers le dispositif (6) de réception du module (1) émetteur-récepteur.

13. Module émetteur-récepteur optoélectronique selon l'une des revendications 1 à 11, **caractérisé en ce que** le dispositif (7) de compensation soustrait le signal électrique de correction engendré du signal électrique de données du dispositif de réception.

14. Module émetteur-récepteur optoélectronique selon l'une des revendications 1 à 12, **caractérisé en ce que** le dispositif (5) d'émission, le dispositif (6) de réception et le dispositif (7) de compensation sont disposés dans un boîtier (2) commun, le dispositif (3') de couplage permettant de raccorder le guide (4) d'onde lumineuse au boîtier (2).

15. Procédé de réception de signaux optiques de données sur un premier module émetteur-récepteur ayant un dispositif d'émission et de réception optoélectronique et un dispositif de couplage à un réseau optique, les signaux optiques de données étant émis par un deuxième module émetteur-récepteur vers le premier module émetteur-récepteur en passant par le réseau optique,
**caractérisé par** les stades dans lesquels :
- on émet des signaux (T1) optiques de test d'amplitude définie et de fréquence définie au moyen du premier module émetteur-récepteur,
- on reçoit les composantes (R1) de réflexion des signaux (T1) optiques de test émis au moyen du premier module émetteur-récepteur,
- on détermine des paramètres caractéristiques des propriétés de réflexion en comparant des signaux (T1) de test émis et des composantes (R1) de réflexion reçus,
- on envoie des signaux (D1) optiques de données au moyen du premier module émetteur-récepteur,
- on envoie des signaux (D2) optiques de données au moyen du deuxième module émetteur-récepteur,
- on reçoit des signaux (E1) optiques au moyen du premier module émetteur-récepteur,
- on engendre un signal (K1) de correction au moyen des paramètres caractéristiques des propriétés de réflexion et des données optiques émises du premier module émetteur-récepteur et
- on corrige les signaux (E1) reçus par le signal (K1) de correction.

16. Procédé de réception de signaux optiques de données selon la revendication 15, **caractérisé en ce qu'**on effectue la réception des composantes (R1) de réflexion des signaux (T1) optiques de test émis avec résolution dans le temps et en amplitude.

17. Procédé de réception de signaux optiques de données selon la revendication 16, **caractérisé en ce que** l'on détermine comme paramètres caractéristiques des propriétés de réflexion l'atténuation et la position en phase des composantes (R1) de réflexion en comparaison des signaux (T1) optiques de test émis.

18. Procédé de réception de signaux optiques de données selon l'une des revendications 15 à 17, **caractérisé en ce que** l'on corrige les signaux (E1) optiques reçus en temps réel par les signaux (K1) de correction.

19. Procédé de réception de signaux optiques de données selon l'une des revendications 15 à 17, **caractérisé en ce que** l'on corrige les signaux (E1) optiques reçus après un retard dans le temps par les signaux (K1) de correction.

20. Procédé de réception de signaux optiques de données selon l'une des revendications 15 à 19, **caractérisé en ce que** pour l'émission des données (D1) optiques du premier module émetteur-récepteur et pour l'émission des données (D2) optiques du deuxième module émetteur-récepteur, on utilise de la lumière ayant sensiblement la même longueur d'onde.
